# EUROPEAN PATENT SPECIFICATION

(11) **EP 1 025 384 B1**
(45) Date of publication and mention of the grant of the patent: **27.02.2002**
(21) Application number: 98949951.2
(22) Date of filing: 16.10.1998
(51) Int. Cl.: F16L 59/02

(54) **PIPE SECTION COMPRISING AN ANNULAR INSULATION LAYER**
ROHRABSCHNITT MIT EINER RINGFÖRMIGEN ISOLATIONSSCHICHT
SECTION DE TUBE COMPORTANT UNE COUCHE D'ISOLATION ANNULAIRE

(30) Priority: 17.10.1997 DK 118997
(43) Date of publication of application: 09.08.2000
(73) Proprietor: Rockwool International A/S, 2640 Hedehusene (DK)
(72) Inventor: CRIDLAND, Ian, DK-2720 Vanlose (DK); ORTOFT, Finn, DK-2640 Hedehusene (DK); POULSEN, Steen, Block, DK-2670 Greve Strand (DK)
(74) Representative: Hegner, Anette
(86) International application number: DK9800451
(87) International publication number: WO9920932

(56) References cited:
- EP-A2- 0 069 543
- EP-A2- 0 152 393
- GB-A- 787 396
- GB-A- 2 241 546
- US-A- 4 157 410
- US-A- 4 748 060
- US-A- 5 006 185
- US-A- 5 419 859
- US-A- 5 569 513

## Description

The present invention relates to a pipe section comprising an annular insulation layer composed by two or more separately produced, juxtaposed parts each having two side surfaces facing side surfaces of neighbouring parts to form a total of at least two pairs of adjoining side surfaces within the insulation layer, and said layer comprising a through-going opening slit in the axial direction between one pair of said adjoining side surfaces which opening slit can be opened for introducing the pipe section sideways on a pipe, and one or more hinges in connection with one or more other pairs of said adjoining side surfaces facilitating the opening of the opening slit.

A pipe section is typically an annular body comprising an axial opening slit bisecting the cylinder wall. The opening slit may be opened and the pipe section may subsequently be introduced sideways on a pipe and closed around said pipe eventually forming a cover thereon. Optionally the opening slit of a pipe section may be sealed after the pipe section is mounted, using e.g. an adhesive tape.

Further, a pipe section may comprise an axial hinge slit which from the inside cuts partly through the wall of the pipe section vis-a-vis the opening slit. The hinge slit facilitates the opening of the pipe section and hence the workload necessary when mounting the pipe section on a pipe. Further, many materials used for pipe sections, such as mineral wool, are, to some extent, brittle and the use of a hinge slit thus reduces the risk of damaging the pipe section wall during opening, i.e. breaking the pipe section in two.

Pipe sections of the above disclosed type is i.a. disclosed in SE 388 679.

It is furthermore known from WO 97/01006 to produce individual parts of pipe sections, i.e. as semi-annular parts. This procedure offers several technical and economical advantages over the prior art production techniques.

It is also known in the art to assemble pipe sections from such individually produced parts in a way where the parts are completely covered on the outer surface by a metal-foil interconnecting the parts but leaving an opening slit, and where said sheet is adhered to the said outer surfaces of the parts. The sheet thus keeps the individual parts together and acts as a hinge along the joint.

However, when mounting such a pipe section on a pipe, it is in most cases desirable that the opening slit of the pipe section is re-closed automatically after mounting thus keeping the pipe section in place. This requires a resilience or "flexible force" in the hinge.

It has in practice proven to be virtually impossible to obtain such a sufficient resilience by use of a sheet material covering alone.

It is furthermore known from US-A-5 569 513 to produce pipe sections from a brittle aerogel. The aerogel insulation layer is composed of two semi annular parts which are to be assembled on the pipe to form a complete tubular insulation covering. The two parts are provided with a layer of an adhesive material on the respective mating side surfaces which layer is provided with a release liner. When mounting the pipe section on the pipe, the release liner is removed and the two completely independent parts are mated around the pipe to form the annual pipe section.

The pipe section according to US-A-5 569 513, however, does not have any hinge functionality and is therefore not self-closing. Accordingly, it is more troublesome to have to work with these pipe sections comprised of two completely independent pieces than the common prior art one-piece pipe sections.

Furthermore, when mounting the aerogel pipe sections, the sticky adhesive material on the mating surfaces of the pipe section parts is completely exposed to the surrounding atmosphere, which could be disadvantageous when working in the typically dusty insulation environment, as the dust might impair the adhesion.

The object of the present invention is accordingly to provide a pipe section composed of individually produced parts which has an appearance and functionality which is similar to conventional based pipe sections comprising a one-part insulation layer.

This object is obtained by the pipe section according to the present invention characterized in that the hinge is resilient and obtained by means of an adhesive disposed in the zone between the adjoining side surfaces of the hinge.

It has proven possible to obtain a pipe section having a satisfactory resilient hinge functionality by joining the separately produced parts by means of an adhesive material disposed in the zone between the mutually facing and adjoining side surfaces. The phrase resilient hinge thus designates a hinge functionality substantially fixing the pipe section parts together at all times, facilitating the opening of the opening slit and capable of automatically, substantially reclosing the opening slit after a forced opening thereof in connection with the mounting of the pipe section on a pipe, as it is known from prior art pipe sections employing a one-piece insulation layer.

In this manner, it is possible to exploit the advantages of producing the pipe section in separate parts while at the same time obtaining the advantages of the classical pipe section regarding its functionality, handling and appearance.

The term "side surface" as used herein is denoting the surfaces of the individually produced parts of the insulation layer of the pipe sections according to the present invention which faces a corresponding side surface of a juxtaposed and adjoining part.

The term "juxtaposed parts" as used herein means that the parts are disposed in a side-by-side relationship as opposed to in seriatim with mutually facing end surfaces.

Accordingly, the joint of such mutually facing side surfaces of two juxtaposed and adjoining parts is located within the insulation layer of the pipe section.

When placing the adhesive material in the zone between the adjoining side surfaces, it is a further advantage that no such wrapping of the pipe section is necessary in order to keep the parts together.

However, the pipe sections according to the invention may be wrapped for other purposes than keeping the parts together. In the latter, case it is an advantage of the pipe sections according to the invention that the wrapping may be applied by prior art techniques. It is a further advantage, that less adhesive is needed to fixate the wrapping when the wrapping is not to act as a hinge.

The pipe sections according to the invention may comprise 2 or more individually produced parts. When the pipe section comprises more than two individually produced parts, it is possible to introduce several hinges, i.e. each joint may act as a hinge slit except for the joint acting as opening slit.

The individually produced parts may have any shape of outer surface and/or inner surface which enables the formation of pipe sections having any type of annular cross section, thus making it possible to produce pipe sections applicable for mounting on any shape of pipes, e.g. pipes having a rectangular or quadratic cross section. It is, however, preferred that the basic pipe section insulation layer has a circular and annular cross section.

According to the invention, the adhesive material preferably only takes up part of the zone between the adjoining side surfaces, more preferably the adhesive material is disposed primarily in the 2/3^{rd} of the zone between the adjoining side surfaces closest to the outer surface of the pipe section insulation layer and even more preferably in the outer half-part of the zone between the adjoining side surfaces. These embodiments of the hinge functionality have proven to facilitate the opening of the opening slit in particular. However, it is also possible to obtain the desired hinge functionality even having the adhesive material disposed in the entire zone between the adjoining side surfaces all depending on the type of adhesive material.

The adhesive material may be disposed as one or more continuous bands or stripes or as discrete points (e.g. dots, squares, rectangles or circles) or any combination thereof. Preferably, the adhesive material is in the form of parallel continuous stripes extending in the longitudinal direction of the pipe section within the zone between the adjoining side surfaces between the neighboring parts. Depending on the diameter of the pipe section and the wall thickness thereof, it is preferable to use two or three such continuous stripes of adhesive material extending in the longitudinal direction within the zone between the adjoining side surfaces.

It is preferable that the outermost stripe of adhesive is broader than the other(s). The purpose of the outermost stripe is primarily to mutually fixate the adjoining parts together where the purpose of the other stripe(s) primarily is to provide the resilience.

As adhesive material, it is preferred to use an adhesive or a combination of different adhesives disposed directly on at least part of the side surface of at least one of the pipe section parts. In practice, the applied adhesive will be disposed in a zone extending into the insulation layer. According to another embodiment of the pipe section according to the invention it is also possible to use one or more adhesives disposed on a carrier means, i.e. in the form of a double-sided adhesive tape.

The adhesive may be any curable or non-curable glue or binder, a hot-melt, a pressure sensitive adhesive or a structural adhesive as known in the art. Further, a number of such adhesives may be used in combination.

When the pipe section wall itself is somewhat resilient, e.g. a curable adhesive that binds the pipe section parts together in a relatively stiff manner, may be used.

When the pipe section wall is brittle and/or less resilient, it is preferred that the adhesive itself is sufficiently elastic to provide at least part of the desired resilience in the hinge and/or that the adhesive itself retains its adhesive properties sufficiently to re-fixate the parts when the hinge is re-closed after a temporary breakage of the fixation during opening. These latter effects may be obtained by using an adhesive in the form of e.g. a thermoplastic material and/or a non-curable adhesive.

Preferably, the adhesive is a thermoplastic material or non-curable adhesive, e.g. a hot-melt or a non-curable thermoplastic glue. More preferably, the glue or hot-melt has a melting point around 70-100 °C, preferably around 80-90 °C.

It is further advantageous to use an adhesive having good pouring properties in the melted state, e.g. in terms of viscosity. The viscosity at 175 °C is preferably in the range 800-1200 mPas and more preferably around 1000 mPas (Brookfield RVT, spindle 21, speed 20). An applicable and preferred adhesive is e.g. Bostik Thermoresol™ A66.

When using a non-curable glue or hot-melt,it is preferable to apply approximately between 150 and 450 g per m² of pipe section side surface within the hinge slit, more preferable between 190 and 375 g/m². For the typical pipe section,the amount of adhesive corresponds to around 1.5-3 g adhesive per m pipe section.

The adhesive should retain its adhesive effect for an extended period of time. Preferably, the adhesive effect is substantially retained throughout the entire lifetime of the pipe section, but if the pipe section is sealed by other means upon mounting, it is only necessary for the adhesive to be functional until such time, i.e. the adhesive effect should at least be retained throughout the typical shelf-life of the pipe section. It is also desirable that the adhesive allows the pipe section to be opened a number of times, without losing the adhesive effect.

Furthermore, due to possible fire hazard, the applied adhesive should have a relatively low energy content and should be relatively non-inflammable.

It is also desirable that the adhesive does not contain or release substances that might damage the environment, endanger the health of people or invoke corrosion on the insulated pipe. In the latter case, it is thus preferred that the adhesive substantially does not contain or at least does not release chlorine.

A further embodiment of the pipe section according to the invention, relates to a pipe section provided with means for sealing the opening slit after the mounting of the pipe section on a pipe. The means for sealing the opening slit may be an adhesive disposed within the zone between the adjoining side surfaces of the opening slit. The adhesive disposed in the opening slit may further be covered with a protective layer, e.g. a silicone-treated tape, which may be stripped off before the final closure of the opening slit, exposing the adhesive to the opposing surface within the zone between the adjoining side surfaces of the opening slit.

The invention further relates to a process for producing the pipe sections according to the invention.

The process for producing pipe sections according to the invention comprises the steps of conveying a first separate pipe section part in a way to make it pass an adhesive supply-nozzle, supplying an amount of adhesive to at least one of the side surfaces of said pipe section part by means of said nozzle, positioning said first pipe section part juxtaposed to at least one other pipe section part and bringing the opposing side surfaces of said pipe section parts in mutual contact and maintaining the contact until sufficient adhesion between said parts has been established.

The adhesive may be supplied to one or more of the side surfaces of one or more of the pipe section parts. According to the invention, two or more such pipe section parts may be supplied with adhesive at the same time or one after the other before the pipe section is assembled by joining the parts.

Preferably, two juxtaposed half-parts of a pipe section are used for forming a pipe section by the method according to the invention, which method comprises the steps of conveying two juxtaposed half-parts of a pipe section insulation layer, the side surfaces substantially facing one another, on each side of an adhesive supply-nozzle, spraying an adhesive material through said nozzle on at least one of the mutually facing side surfaces of the parts and joining said parts to obtain the insulation layer of a pipe section.

The invention further relates to a pipe section obtainable by the above-mentioned method according to invention.

The pipe sections according to the invention may be produced from any known insulating material comprising foam, plastic, natural fibres or mineral fibres. However, the advantages of the invention are mostly expressed when using pipe sections formed of mineral fibres. It is thus according to the invention in particular possible to obtain mineral fibre based pipe sections composed by two or more separately produced parts having substantially the same properties as prior art pipe sections having a one-piece continuous mineral fibre based insulation layer.

The term mineral fibre as used herein comprises all types of man-made mineral fibres, such as rock, glass or slag fibers, in particular fibres used in materials intended for thermal insulation, sound insulation or sound regulation, fire retardant purposes, and as filler in cement, plastics or other substances, or which are used as culture medium for plants.

The invention will now be further illustrated by means of drawings:

Fig. 1: Shows a side-view and a cross sectional side view in part of a pipe section and a adhesive supply nozzle.

Fig. 2: Shows a cross sectional end-view of part of a pipe section and a adhesive supply nozzle.

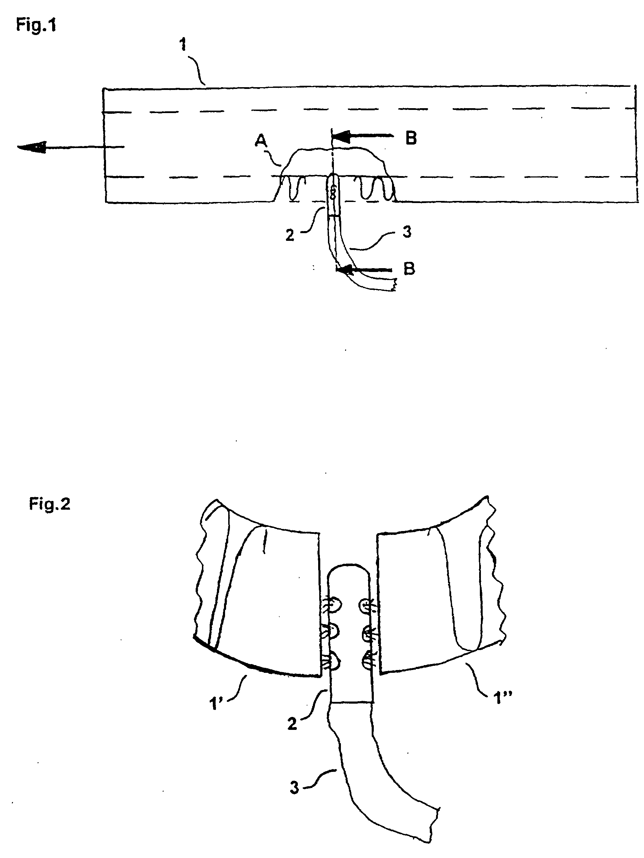

Fig. 1 illustrates a pipe section 1, composed by two juxtaposed parts (Fig. 2: 1' and 1''), the parts being conveyed in such a manner that the two parts pass with a side surface on each side of an adhesive supply nozzle 2 having a number of orifices through which the adhesive is supplied to the side surfaces of the passing pipe section parts, as shown in the cross sectional view zone A. The adhesive supply nozzle is connected to adhesive supplying means (not shown) through a tube 3.

Fig. 2 illustrates two juxtaposed pipe section parts 1' and 1'' along the sectional view line B-B in Fig. 1. The two parts are placed on each side of an adhesive supply nozzle 2, and the adhesive supply nozzle is connected to adhesive supplying means (not shown) through a tube 3.

The invention will now be further illustrated by the use of an example:

### Example:

Two separately produced semi annular pipe section parts 1' and 1'' having an inner diameter of 30 mm and an outer diameter of 90 mm are juxtaposed having opposing side surfaces and are conveyed in the longitudinal direction by means of two conveyer bands. The parts are made to pass on each side of an adhesive supply nozzle 2, having a number of orifices, and in such a way that two of the opposing side surfaces face a number of the orifices, and said nozzle sprays an amount of liquefied hot-melt, through said orifices, at a temperature of around 85 °C, onto a part of each of the opposing side surfaces in an amount of around 2 g hot-melt per m passing pipe section, whereafter the side surfaces of the pipe section parts are brought in mutual contact and kept together for around 10 seconds, until the hot-melt is sufficiently solidified to fixate the pipe section part to one another.

## Claims

1. A pipe section comprising an annular insulation layer composed by two or more separately produced, juxtaposed parts each having two side surfaces facing side surfaces of neighbouring parts to form a total of at least two pairs of adjoining side surfaces within the insulation layer, and said layer comprising a through-going opening slit in the axial direction between one pair of said adjoining side surfaces which opening slit can be opened for introducing the pipe section sideways on a pipe, and one or more hinges in connection with one or more other pairs of said adjoining side surfaces facilitating the opening of the opening slit **characterized in that** the hinge is resilient and obtained by means of an adhesive disposed in the zone between the adjoining side surfaces of the hinge.

2. A pipe section according to claim 1, **characterized in that** the adhesive is disposed in the outer 2/3 part of the said zone.

3. A pipe section according to claim 2, **characterized in that** the adhesive is disposed in the outer 1/2 part of the said zone.

4. A pipe section according to any of the preceding claims, **characterized in that** the adhesive is provided in the form of a pattern of separate bands, stripes, dots, squares, rectangles or circles.

5. A pipe section according to claim 4, **characterized in that** the adhesive is provided in the form of a number of stripes extending in the axial direction of the pipe section.

6. A pipe section according to claim 5, **characterized in that** the adhesive is provided in the form of two or three stripes, where the outermost stripe is broader than the other stripes.

7. A pipe section according to any of the preceding claims, **characterized in that** the adhesive is disposed on a carrier means.

8. A pipe section according to any of the preceding claims, **characterized in that** the adhesive is a non-curable glue, a hot melt, a pressure sensitive adhesive or a structural adhesive.

9. A pipe section according to any of the preceding claims, **characterized in that** the adhesive has a melting point between 70 and 100 °C.

10. A pipe section according to any of the preceding claims, **characterized in that** the slit is provided with means for sealing said slit.

11. A pipe section according to claim 10, **characterized in that** the said sealing means is an adhesive tape covered by a removable strip.

12. A pipe section according to any of the preceding claims, **characterized in that** the insulation layer is composed of two parts.

13. A pipe section according to any of the preceding claims, **characterized in that** the insulation layer has a circular, annular cross section.

14. A pipe section according to any of the preceding claims, **characterized in that** the insulation layer has a rectangular or quadratic, annular cross section.

15. A pipe section according to any of the preceding claims, **characterized in that** the insulation layer is made from a fibrous or foam material.

16. A pipe section according to claims 1-14, **characterized in that** the insulation layer is made from a mineral fibre material.

17. A method of producing a pipe section according to claim 1 comprising an insulation layer extending around a cavity, said layer comprising a through-going slit in the axial direction, wherein the layer is composed of two or more separately produced, juxtaposed parts having adjoining side surfaces comprising the steps of conveying a first separate pipe section part in a way to make it pass an adhesive supply-nozzle, supplying an amount of adhesive to at least one of the side surfaces of said pipe section part by means of said nozzle, positioning said first pipe section part juxtaposed to at least one other pipe section part and adjoining the juxtaposed side surfaces of said pipe section parts to obtain mutual contact and maintaining the contact until sufficient adhesion between said parts has been established.

18. A method according to claim 17, **characterized in** comprising the steps of conveying two juxtaposed half-parts of a pipe section insulation layer, the side surfaces substantially facing one another, on each side of an adhesive supply-nozzle, spraying an adhesive material through said nozzle on at least one of the mutually facing side surfaces of the parts and joining said parts to obtain the insulation layer of a pipe section.

## Patentansprüche

1. Rohrstück mit einer ringförmigen Isolationsschicht, die aufgebaut ist aus zwei oder mehreren getrennt hergestellten, nebeneinander angeordneten Teilen mit jeweils zwei Seitenoberflächen, die Seitenoberflächen benachbarter Teile zugewandt sind, so dass insgesamt innerhalb der Isolationsschicht zumindest zwei Paare aneinander anschließender Seitenoberflächen entstehen, wobei die Schicht einen in axialer Richtung zwischen einem Paar der aneinander anschließenden Seitenoberflächen durchgehenden Öffnungsschlitz, der zum seitlichen Aufbringen des Rohrstückes auf ein Rohr geöffnet werden kann, und eine oder mehrere gelenkige Verbindungen, die das Öffnen des Öffnungsschlitzes erleichtern, in Zusammenhang mit einem oder mehreren anderen Paaren der aneinander anschließenden Seitenoberflächen aufweist, **dadurch gekennzeichnet, dass** die gelenkige Verbindung elastisch ist und mit Hilfe eines in dem Bereich zwischen den aneinander anschließenden Seitenoberflächen der gelenkigen Verbindung angeordneten Haftmittels verwirklicht ist.

2. Rohrstück nach Anspruch 1, **dadurch gekennzeichnet, dass** das Haftmittel in den äußeren zwei Dritteln des Bereichs angeordnet ist.

3. Rohrstück nach Anspruch 2, **dadurch gekennzeichnet, dass** das Haftmittel in der äußeren Hälfte des Bereichs angeordnet ist.

4. Rohrstück nach einem der vorstehenden Ansprüche, **dadurch gekennzeichnet, dass** das Haftmittel in Form eines Musters getrennter Bänder, Streifen, Punkte, Quadrate, Rechtecke oder Kreise vorgesehen ist.

5. Rohrstück nach Anspruch 4, **dadurch gekennzeichnet, dass** das Haftmittel in der Form einer Zahl sich in der axialen Richtung des Rohrstücks erstreckender Streifen vorgesehen ist.

6. Rohrstück nach Anspruch 5, **dadurch gekennzeichnet, dass** das Haftmittel in der Form zweier oder dreier Streifen vorgesehen ist, wobei der äußerste Streifen breiter als die anderen Streifen ist.

7. Rohrstück nach einem der vorstehenden Ansprüche, **dadurch gekennzeichnet, dass** das Haftmittel auf einem Träger angeordnet ist.

8. Rohrstück nach einem der vorstehenden Ansprüche, **dadurch gekennzeichnet, dass** das Haftmittel ein nicht aushärtender Klebstoff, eine heiße Schmelze, ein druckempfindliches Haftmittel oder ein strukturelles Haftmittel ist.

9. Rohrstück nach einem der vorstehenden Ansprüche, **dadurch gekennzeichnet, dass** das Haftmittel einen Schmelzpunkt zwischen 70 und 100° C hat.

10. Rohrstück nach einem der vorstehenden Ansprüche, **dadurch gekennzeichnet, dass** der Schlitz mit einem Mittel zum Verschließen des Schlitzes versehen ist.

11. Rohrstück nach Anspruch 10, **dadurch gekennzeichnet, dass** das Verschlussmittel ein von einem entfernbaren Streifen abgedecktes Haftband ist.

12. Rohrstück nach einem der vorstehenden Ansprüche, **dadurch gekennzeichnet, dass** die Isolationsschicht aus zwei Teilen aufgebaut ist.

13. Rohrstück nach einem der vorstehenden Ansprüche, **dadurch gekennzeichnet, dass** die Isolationsschicht einen kreisringförmigen Querschnitt aufweist.

14. Rohrstück nach einem der vorstehenden Ansprüche, **dadurch gekennzeichnet, dass** die Isolationsschicht einen rechteckringförmigen oder quadratringförmigen Querschnitt aufweist.

15. Rohrstück nach einem der vorstehenden Ansprüche, **dadurch gekennzeichnet, dass** die Isolationsschicht aus Fasermaterial oder Schaummaterial aufgebaut ist.

16. Rohrstück nach einem der Ansprüche 1 - 14, **dadurch gekennzeichnet, dass** die Isolationsschicht aus Mineralfasermaterial aufgebaut ist.

17. Verfahren zum Herstellen eines Rohrstücks nach Anspruch 1 mit einer sich um einen Hohlraum erstreckenden Isolationsschicht, wobei die Schicht in der axialen Richtung einen durchgehenden Schlitz aufweist und aus zwei oder mehreren getrennt hergestellten, nebeneinander angeordneten Teilen mit aneinander anschließenden Seitenoberflächen aufgebaut ist und wobei das Verfahren die Schritte beinhaltet ein erstes getrenntes Rohrstückteil in solcher Weise zu transportieren, dass es an einer Haftmittelzuführdüse entlang läuft, eine Menge Haftmittel mit Hilfe der Düse auf zumindest eine der Seitenoberflächen des Rohrstückteils aufzubringen, das erste Rohrstückteil neben zumindest einem anderen Rohrstückteil anzuordnen und die nebeneinanderliegenden Seitenoberflächen der Rohrstückteile in Anschluss aneinander zu bringen, so dass sie sich gegenseitig berühren, und die Berührung aufrecht zu erhalten, bis zwischen den Teilen eine ausreichende Haftung hergestellt ist.

18. Verfahren nach Anspruch 17, **gekennzeichnet durch** die Schritte, zwei nebeneinander angeordnete Hälften einer Rohrstückisolationsschicht zu transportieren, wobei die Seitenoberflächen im Wesentlichen einander zugewandt sind, auf jeder Seite einer Haftmittelzuführdüse **durch** die Düse auf zumindest eine der einander zugewandten Seitenoberflächen der Teile ein Haftmittel aufzusprühen und die Teile zu verbinden, um die Isolationsschicht eines Rohrstücks zu erhalten.

## Revendications

1. Section de conduite comprenant une couche isolante annulaire composée d'une ou plusieurs pièces juxtaposées, produites séparément, chacune dotée de deux surfaces latérales faisant face aux surfaces latérales de pièces voisines pour former un total d'au moins deux paires de surfaces latérales attenantes dans la couche isolante, et ladite couche comprenant une fente d'ouverture traversante dans le sens axial entre une paire desdites surfaces latérales attenantes, dont la fente d'ouverture peut être ouverte pour introduire la section de conduite de côté sur une conduite, et une ou plusieurs charnières en connexion avec une ou plusieurs autres paires desdites surfaces latérales attenantes facilitant l'ouverture de la fente d'ouverture, **caractérisée en ce que** la charnière est élastique et obtenue au moyen d'un adhésif disposé dans la zone entre les surfaces latérales attenantes de la charnière.

2. Section de conduite selon la revendication 1, **caractérisée en ce que** l'adhésif est disposé sur les 2/3 extérieurs de ladite zone.

3. Section de conduite selon la revendication 2, **caractérisée en ce que** l'adhésif est disposé sur la moitié extérieure de ladite zone.

4. Section de conduite selon l'une quelconque des revendications précédentes, **caractérisée en ce que** l'adhésif est fourni sous la forme d'un ensemble de bandes, rubans, points, carrés, rectangles ou cercles.

5. Section de conduite selon la revendication 4, **caractérisée en ce que** l'adhésif est fourni sous la forme d'un nombre de bandes s'étendant dans le sens axial de la section de conduite.

6. Section de conduite selon la revendication 5, **caractérisée en ce que** l'adhésif est fourni sous la forme de deux ou trois bandes, dans laquelle la bande la plus à l'extérieur est plus large que les autres bandes.

7. Section de conduite selon l'une quelconque des revendications précédentes, **caractérisée en ce que** l'adhésif est disposé sur un moyen formant support.

8. Section de conduite selon l'une quelconque des revendications précédentes, **caractérisée en ce que** l'adhésif est une colle non durcissable, un thermofusible, un adhésif sensible à la pression ou un adhésif structurel.

9. Section de conduite selon l'une quelconque des revendications précédentes, **caractérisée en ce que** l'adhésif a un point de fusion compris entre 70 et 100°C.

10. Section de conduite selon l'une quelconque des revendications précédentes, **caractérisée en ce que** la fente est munie d'un moyen de sceller ladite fente.

11. Section de conduite selon la revendication 10, **caractérisée en ce que** ledit moyen de sceller est un ruban adhésif recouvert d'une bande mobile.

12. Section de conduite selon l'une quelconque des revendications précédentes, **caractérisée en ce que** la couche isolante est composée de deux parties.

13. Section de conduite selon l'une quelconque des revendications précédentes, **caractérisée en ce que** la couche isolante possède une section transversale en forme d'anneau, circulaire.

14. Section de conduite selon l'une quelconque des revendications précédentes, **caractérisée en ce que** la couche isolante possède une section transversale en forme d'anneau, rectangulaire ou quadratique.

15. Section de conduite selon l'une quelconque des revendications précédentes, **caractérisée en ce que** la couche isolante est fabriquée à partir d'un matériau fibreux ou en mousse.

16. Section de conduite selon les revendications 1 à 14, **caractérisée en ce que** la couche isolante est fabriquée à partir d'un matériau en fibre minérale.

17. Procédé de production d'une section de conduite selon la revendication 1, comprenant une couche isolante s'étendant autour d'une cavité, ladite couche comprenant une fente continue dans le sens axial, dans lequel la couche est composée de deux pièces produites séparément, juxtaposées dotées de surfaces latérales attenantes comprenant les étapes consistant à véhiculer une première pièce de section de conduite séparée de manière à la faire passer par un distributeur d'adhésif, à fournir une quantité d'adhésif à au moins l'une des surfaces latérales de ladite pièce de section de conduite au moyen dudit distributeur, à positionner ladite première pièce de section de conduite juxtaposée à au moins une autre pièce de section de conduite et à mettre en coïncidence les surfaces latérales juxtaposées desdites pièces de section de conduite pour obtenir un contact mutuel et maintenir le contact jusqu'à ce qu'une adhérence suffisante entre lesdites pièces ait été établie.

18. Procédé selon la revendication 17, **caractérisé en ce qu'**il comprend les étapes consistant à véhiculer deux demi-pièces juxtaposées d'une couche isolante de section de conduite, les surfaces latérales se faisant sensiblement face, de chaque côté d'un distributeur d'adhésif, à diffuser un matériau adhésif par ledit distributeur sur au moins l'une des surfaces latérales des pièces se faisant face et à joindre lesdites pièces pour obtenir la couche isolante d'une section de conduite.
